# EUROPEAN PATENT APPLICATION

(11) **EP 2 040 133 A1**
(43) Date of publication of application: **25.03.2009**
(21) Application number: 07767655.9
(22) Date of filing: 27.06.2007
(51) Int. Cl.: G03H 1/26, G11B 7/0065, G11B 7/135

(54) **HOLOGRAM REPRODUCING DEVICE**

(30) Priority: 28.06.2006 JP 2006177844
(71) Applicant: Alps Electric Co., Ltd., Tokyo 145-8501 (JP)
(72) Inventor: SOMENO, Yoshihiro, Tokyo 145-8501 (JP)
(74) Representative: Klunker, Hans-Friedrich
(86) International application number: PCT/JP2007/062852
(87) International publication number: WO 2008/001794

(57) **Abstract**

[Object] To provide a hologram apparatus capable of reconstructing angle-multiplexed holograms recorded in a recording medium and correcting the incident angle of a reconstruction reference light beam made incident on the recording medium.

[Solving Means] Light emitted from a light source 11 and passes through the collimating lens 12 forms a parallel light beam B1, which is reflected by a reflecting surface 13a of a movable mirror 13. The parallel light beam B1 is made incident on a recording medium 20 at an incident angle θ1. The reconstructed light beam Da generated by Bragg diffraction caused by a hologram recorded in the recording medium 20 is output at an output angle θ2. The output reconstructed light beam Da is received by a flat photosensor 14. In this way, information recorded in the form of a hologram is read out. By changing the angle of the movable mirror 13 in at least two directions, the incident angle θ1 can be changed, and therefore, a hologram recorded in an angle multiplexed manner can be reconstructed. In addition, by changing the incident angle in a direction perpendicular to the changing direction, an incident angle of a reconstruction reference light beam B2 made incident on a hologram region can be controlled.

## Description

### Technical Field

The present invention relates to a hologram reconstructing apparatus for reconstructing information stored in a recording medium made of a photosensitive material in the form of a hologram.

### Background Art

Hologram reconstructing apparatuses for reconstructing information stored in a recording medium made of a photosensitive material in the form of a hologram include a light source, an optical system for providing a light beam emitted from the light source to the recording medium in the form of a reconstruction reference light beam, and a photosensor for detecting a reconstructed light beam output when the reconstruction reference light beam provided to the recording medium is diffracted.

A holographic apparatus described in the following Patent Document 1 includes a reflecting mirror that reflects a reconstruction reference light beam provided from a light source towards a recording medium. By changing the angle of the reflecting mirror, the holographic apparatus changes the incident angle of the reconstruction reference light beam relative to the recording medium so that holographic information recorded in the recording medium in an angle multiplexed manner can be reconstructed.
[Patent Document 1] Japanese Unexamined Patent Application Publication No. 2006-58726

### Disclosure of Invention

### Problems to be Solved by the Invention

In existing holographic apparatuses, a hologram recorded in an angle multiplexed manner can be reconstructed by changing the incident angle of a reconstruction reference light beam in one direction. However, in general, the incident angle of a reconstruction reference light beam relative to a recording medium can be changed only in one direction.

Accordingly, when the position of a head including a light source and a photosensor relative to a recording medium is changed, the reconstruction reference light beam cannot be made incident on the recording medium at an optimal angle, which is problematic.

In order to solve such a problem, the present invention provides a hologram reconstructing apparatus for facilitating correction of the incident angle and allowing holograms recorded in an angle multiplexed manner in multiple directions to be reconstructed by changing the angle of a reconstruction reference light beam in at least two directions.

### Means for Solving the Problems

According to the present invention, a hologram reconstructing apparatus includes a light source for emitting a reconstruction reference light beam onto a recording medium, a photosensor for detecting a reconstructed light beam output when the reconstruction reference light beam is diffracted in a hologram region of the recording medium, and an optical axis alignment mechanism for changing an incident angle of the reconstruction reference light beam emitted from the light source and incident on the hologram region in at least two directions.

According to the present invention, for example, the directions in which the incident angle of the reconstruction reference light beam emitted from the light source and incident on the hologram region is changed are two directions perpendicular to each other.

According to the present invention, in the hologram reconstructing apparatus having a reconstruction reference light beam having an incident angle that changes in the two directions, recorded information of each of holograms recorded in the same hologram region in an angle multiplexed manner can be reconstructed by changing the incident angle relative to the hologram region in a first direction, and the incident angle relative to the hologram region can be corrected by changing the incident angle in a second direction.

By changing the reconstruction reference light beam in the two directions, the incident angle of the reconstruction reference light beam relative to the recording medium can be corrected in a direction other than the angle multiplexing directions as needed. Accordingly, a reconstructed light beam having an optimal output angle can be obtained at all times. In addition, by changing the reconstruction reference light beam in the second direction, holograms recorded in the recording medium in an angle multiplexed manner in two directions can be reconstructed.

According to the present invention, for example, the optical axis alignment mechanism includes a reflecting surface that reflects the reconstruction reference light beam emitted from the light source towards the recording medium and driving means for changing an angle of the reflecting surface.

In such a case, an inclination angle of the reflecting surface is set to an angle obtained by combining an inclination component that directs the reconstruction reference light beam emitted from the light source towards the recording medium and an inclination component that makes the reflected reconstruction reference light beam incident on the hologram region at a predetermined incident angle.

By setting the reflecting surface in the above-described manner, the reconstruction reference light beam emitted from the light source can be directed towards the recording medium and can be made incident on the recording medium at a predetermined incident angle using the single reflecting surface. Furthermore, by moving the reflecting surface, the incident angle of the recording medium relative to the recording medium can be corrected in each direction.

Furthermore, the present invention can be optimally applied to a hologram reconstructing apparatus including the recording medium having a planar shape and removably mounted at a position at which the recording medium faces the optical axis alignment means and the photosensor.

For holographic apparatuses including a recording medium removable from the bodies of the holographic apparatuses, it is difficult to maintain high precision of a facing angle between the recording medium and the head. However, by providing the optical axis alignment mechanism, the reconstruction reference light beam can be emitted at an optimal angle relative to the recording medium mounted from the outside.

### Advantages

According to the present invention, the incident angle of the reconstruction reference light beam incident on a recording medium can be changed in at least two directions. Accordingly, the reconstruction reference light beam can be provided to the hologram region of the recording medium at an optimal incident angle at all times. As a result, a hologram reconstructing apparatus including a removable recording medium can be configured.

In addition, by changing the incident angle in at least two directions, information can be reconstructed from a recording medium having holograms recorded in an angle multiplexed manner in two or more directions.

### Brief Description of Drawings

[Fig. 1] Fig. 1 is a perspective view of a hologram reconstructing apparatus according to an embodiment of the present invention, in which the surface of the hologram reconstructing apparatus facing a recording medium is directed upward.
[Fig. 2] Fig. 2 is a side view of the hologram reconstructing apparatus when a recording medium is mounted in the body of the hologram reconstructing apparatus.
[Fig. 3] Fig. 3 is a component layout diagram illustrating the internal structure of a head as viewed from above at an oblique angle.
[Fig. 4] Fig. 4 is a perspective view of a drive mechanism for inclining a movable mirror as viewed from the back side of a reflecting surface.
[Fig. 5] Fig. 5 is a cross-sectional view of a mirror actuator including the drive mechanism.
[Fig. 6] Fig. 6 is a side view of the hologram reconstructing apparatus when the reconstruction operation is viewed from the direction of arrow V of Fig. 3.
[Fig. 7] Fig. 7 is a plan view of the hologram reconstructing apparatus shown in Fig. 3 as viewed from above, which illustrates the reconstruction operation of the hologram reconstructing apparatus.

### Reference Numerals

- 1: hologram reconstructing apparatus
- 2: body
- 3: outer frame
- 4: X-axis transport screw shaft
- 5: intermediate movable member
- 6: Y-axis transport screw shaft
- 7: head base
- 10: head
- 11: light source
- 12: collimating lens
- 13: movable mirror
- 13a: reflecting surface
- 14: photosensor
- 20: recording medium
- 30: drive mechanism
- B2: reconstruction reference light beam
- Da: reconstructed light beam
- θ1: incident angle
- θ2: output angle

### Best Mode for Carrying Out the Invention

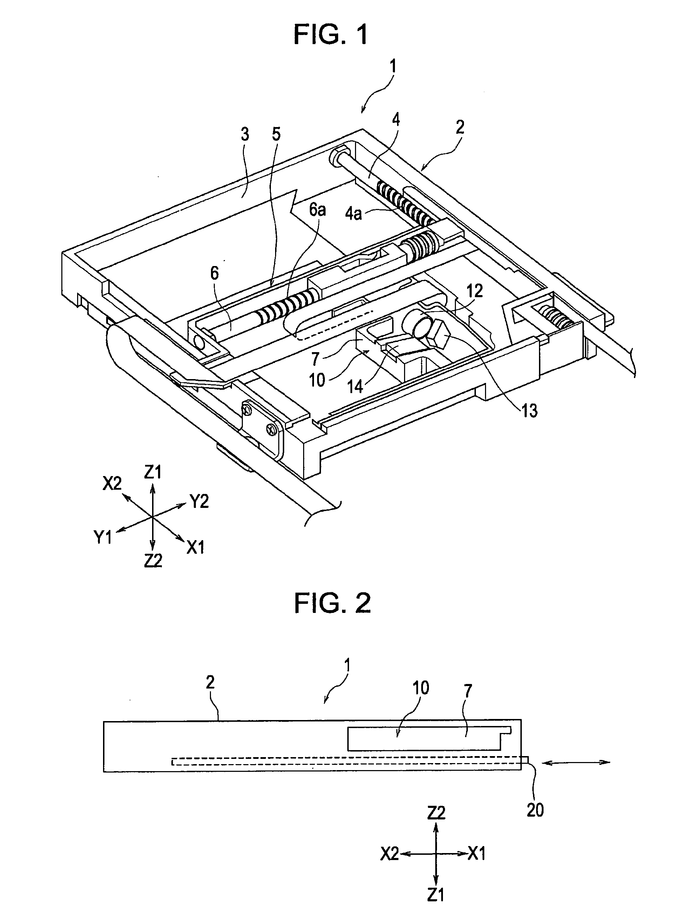

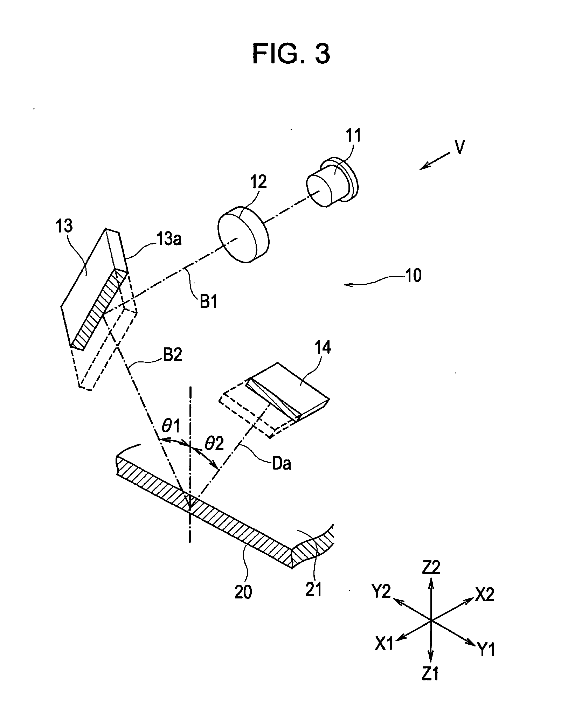

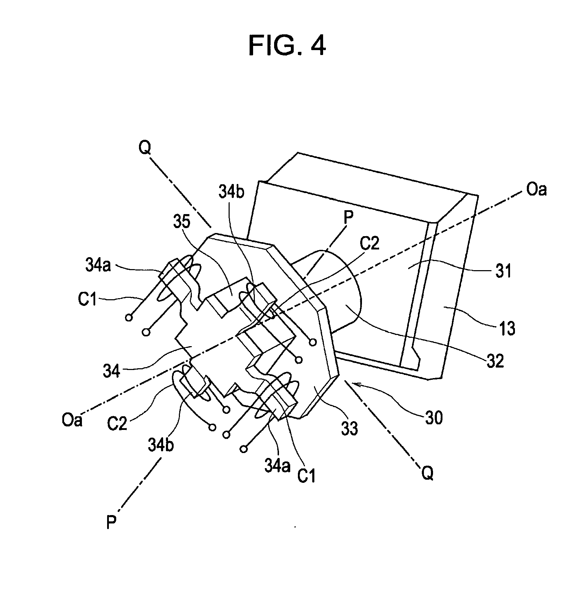

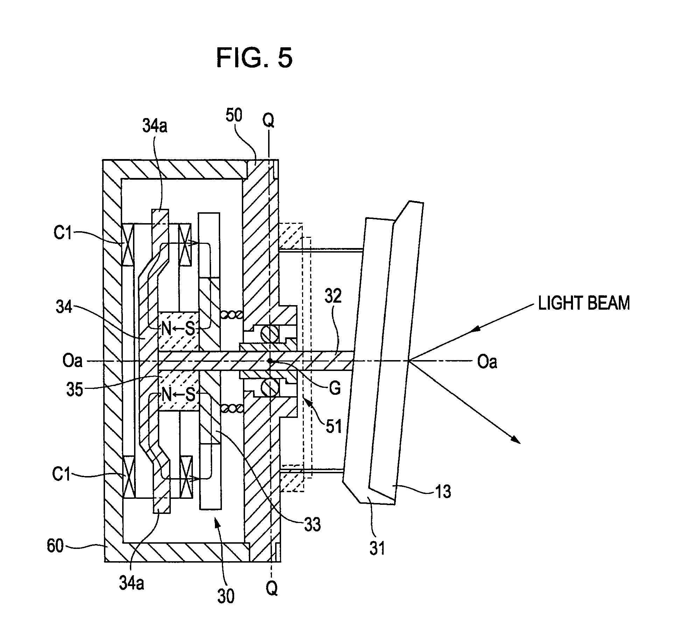

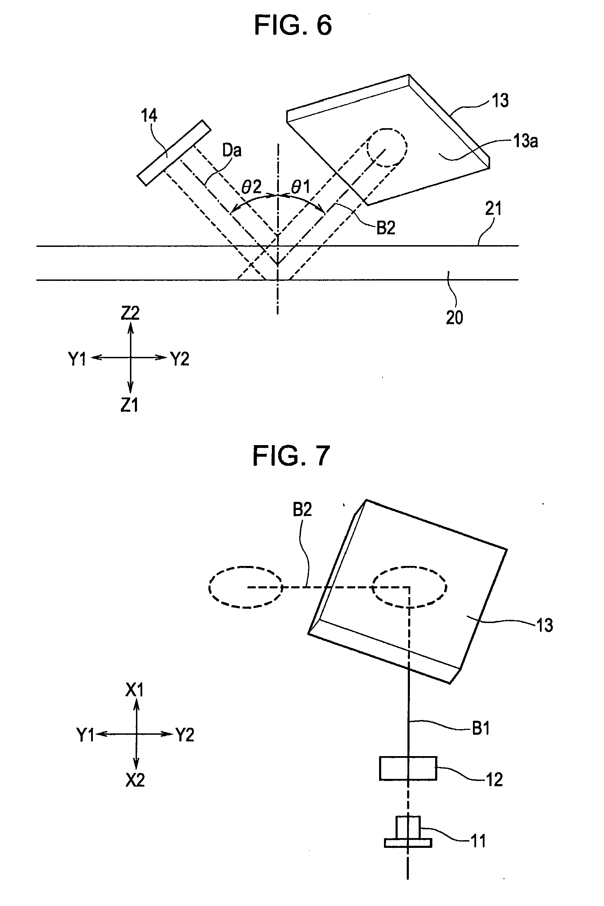

Fig. 1 is a perspective view of a hologram reconstructing apparatus according to an embodiment of the present invention, in which the surface of the hologram reconstructing apparatus facing a recording medium is directed upward. Fig. 2 is a side view of the hologram apparatus when a recording medium is mounted in the hologram apparatus. Fig. 3 is a perspective view illustrating the structure of a head of the hologram apparatus. Fig. 4 is a perspective view of a mirror unit of optical axis changing means and a drive unit when viewed from the back side. Fig. 5 is a cross-sectional view of the optical axis changing means. Fig. 6 is a side view of the hologram reconstructing apparatus when the reconstruction operation is viewed from the direction of arrow V of Fig. 3. Fig. 7 is a plan view of the hologram reconstructing apparatus shown in Fig. 6.

A hologram reconstructing apparatus 1 shown in Figs. 1 and 2 includes a body 2 and a recording medium 20 removably mounted in the body 2.

The body 2 includes an outer frame 3 having a rectangular shape. The outer frame 3 includes an X-axis transport screw shaft 4 extending in the X-axis direction and a motor (not shown) that rotatingly drives the X-axis transport screw shaft 4 mounted therein. An intermediate movable member 5 having a rectangular shape that is slightly smaller than that of the outer frame 3 is supported inside the outer frame 3 so as to be movable in the X-axis direction. The intermediate movable member 5 includes a bearing portion into which the X-axis transport screw shaft 4 is inserted and disposed. The bearing portion includes an engagement member (not shown) that is pressed so as to engage with a screw groove 4a of the X-axis transport screw shaft 4. When the X-axis transport screw shaft 4 is rotatingly driven, the intermediate movable member 5 is moved in an X1 direction or an X2 direction.

The intermediate movable member 5 includes a Y-axis transport screw shaft 6 extending in the Y-axis direction and a motor (not shown) that rotatingly drives the Y-axis transport screw shaft 6 mounted therein. In addition, the intermediate movable member 5 includes a head base 7 that is supported so as to be movable in the Y-axis direction. The Y-axis transport screw shaft 6 is inserted into and disposed in a bearing portion provided on the side surface of the intermediate movable member 5 on the X2 side. The bearing portion includes an engagement member that is pressed by pressing the screw groove 6a so as to engage with a screw groove 6a of the Y-axis transport screw shaft 6.

As shown in Fig. 2, for the hologram reconstructing apparatus 1, the recording medium 20 is removably and replaceably mounted in the body 2. That is, the recording medium 20 is inserted in the X2 direction and is mounted. Furthermore, the recording medium 20 is pulled out in the X1 direction and is removed.

The head base 7 includes a head 10 facing the recording medium 20. As shown in Fig. 3, the head 10 includes a light source 11, a collimating lens 12, a movable mirror 13, and a photosensor 14. In this example, the light source 11 is formed using a vertical cavity surface emitting laser (VCSEL). In addition, the light source 11 is a package including a plurality of VCSELs having different wavelength ranges of emitting light. A diffuse light beam can be obtained from each of the VCSELs. By selecting a plurality of the VCSELs and turning on the selected VCSELs, the wavelength of a reconstruction reference light beam can be changed, as described below.

The diffuse light beams emitted from the light source 11 are converted into a parallel light beam B1 by means of the collimating lens 12. Thereafter, the parallel light beam B1 that has passed through the collimating lens 12 is reflected off a reflecting surface 13a of the movable mirror 13. The reflected parallel light beam B1 is then emitted to the recording medium 20 in the form of a reconstruction reference light beam B2.

In addition, as shown in Figs. 4 and 5, the head 10 includes an optical axis alignment mechanism. The optical axis alignment mechanism primarily includes a mirror member, a drive member 30, a coil member, a bearing member 50, and a securing member 60.

The mirror member includes the movable mirror 13, a mirror supporting stage 31 having the movable mirror 13 secured thereon, and a movable shaft 32 secured to the mirror supporting stage 31.

The movable shaft 32 is supported by a ball bearing portion 51 of the bearing member 50 so as to be tiltable. Thus, the movable shaft 32 is tiltable in directions rotatable about an imaginary axis P and an imaginary axis Q which pass through a center point G at which the movable shaft 32 is supported by the ball bearing portion 51 and which are perpendicular to a center axis Oa.

The drive member 30 is attached to the rear end of the movable shaft 32. The drive member 30 includes a first yoke 33 formed from a magnetic material plate, a magnet 35 disposed on the back of the first yoke 33 and having a rectangular parallelepiped shape, and a second yoke 34 disposed on the opposite side of the magnet 35 from the first yoke 33. All of these members are secured to the movable shaft 32.

In addition, the second yoke 34 has, in an integral manner, arm portions 34a and 34a extending in opposite directions along the imaginary axis Q and arm portions 34b and 34b extending in opposite directions along the imaginary axis P.

The coil member includes a plurality of coils C1, C1, C2, and C2. The coils C1, C1, C2, and C2 are disposed on the inner bottom surface of the securing member 60. In addition, the coils C1 and C1 are disposed so as to be separated by a predetermined gap and so as to surround the arm portions 34a and 34a of the drive member 30. Similarly, the coils C2 and C2 are disposed so as to be separated by a predetermined gap and so as to surround the arm portions 34b and 34b.

When an electromagnetic force is generated by an electrical current flowing in the coils C1 and C1 on the fixed side acting on a magnetic field passing between the first yoke 33 and each of the arm portions 34a and 34a, the movable shaft 32 is displaced so as to be tilted about the imaginary axis P. In contrast, when an electromagnetic force is generated by an electrical current flowing in the coils C2 and C2 on the fixed side acting on a magnetic field passing between the first yoke 33 and each of the arm portions 34b and 34b, the movable shaft 32 is displaced so as to be tilted about the imaginary axis Q. In this way, the angle of the reflecting surface 13a of the movable mirror 13 can be changed in the rotational directions about the two axes.

The readout operation performed by the hologram reconstructing apparatus 1 is described next.

The recording medium 20 is externally mounted in the outer frame 3 of the body 2. At that time, the recording medium 20 is positioned so that a front surface 21 of the recording medium 20 is substantially parallel to the X-Y plane. The recording medium 20 is formed by enclosing a photosensitive material between two transparent thin plate members. Information is recorded, in advance, in a hologram region of the recording medium 20 in the form of a hologram.

According to the present embodiment, information is recorded in the recording medium 20 in the form of a reflective hologram. In a method for recording information in the form of a reflective hologram, an object light beam including information to be recorded is emitted onto one side of the recording medium 20 at a predetermined angle, and a recording reference light beam is emitted onto the other side of the recording medium 20 at a predetermined angle so that the object light beam intersects with the recording reference light beam in the recording medium. In this way, interference fringes corresponding to data representing "1" (brightness) and "0" (darkness) included in the object light beam are recorded in the recording medium 20 so as to be stacked in a layer format in the thickness direction of the recording medium 20. The direction of the interference fringes is the same as the direction of the bisector of the angle formed by the object light beam and the recording reference light beam.

A reconstruction reference light beam B2 is emitted onto the front surface 21 of the recording medium 20 including a hologram recorded therein at a predetermined angle θ1 that is the same as that used in recording the hologram. The reconstruction reference light beam B2 is significantly diffracted (reflected) by the interference fringes of the hologram. The diffraction light beam is output from the front surface 21 in the form of a reconstructed light beam Da.

The diffraction caused by the interference fringes is Bragg diffraction. When a reconstruction reference light beam having a wavelength that is the same as that of the recording reference light beam is made incident at the angle θ1 that is the same as that of the recording reference light beam, a diffraction light beam that is reflected most strongly in an angle-θ2 direction can be obtained. In theory, the incident angle θ1 is the same as the output angle θ2. In this way, when a wavelength λ of the reconstruction reference light beam B2 is the same as the wavelength of the recording reference light beam, the intensity of the reconstructed light beam Da obtained from a hologram recorded in the recording medium 20 is maximized. In addition, when the incident angle θ1 of the reconstruction reference light beam B2 is the same as the incident angle of the recording reference light beam, the reconstructed light beam Da having a maximized intensity can be obtained at an output angle of θ2 (= θ1).

Accordingly, suppose that a plurality of holograms (also referred to as "pages") are recorded in the same hologram region (also referred to as a "book") of the recording medium 20 in an angle multiplexed manner, that is, multiple holograms are recorded in the same region by changing the incident angle of the recording reference light beam. Then, as shown in Fig. 6, the reconstructed light beam Da having a high intensity can be obtained from each of the holograms by changing the incident angle θ1 of the reconstruction reference light beam B2 relative to the recording medium 20 in accordance with the incident angle of the recording reference light beam.

The head 10 includes an aperture member (not shown) between the flat photosensor 14, such as a CMOS sensor, and the recording medium 20. The reconstructed light beam Da having the highest intensity is extracted by the aperture member and is received by the photosensor 14. Note that, if the focal point of the recording reference light beam is set at a position separated from the front surface 21 of the recording medium 20, the reconstructed light beam Da diffracted by the interference fringes of a hologram and output is limited at the focal point position due to phase conjugation. The aperture member is disposed at the beam limiting portion of the reconstructed light beam Da.

In the drive mechanism 30 shown in Fig. 4, the movable shaft 32 is tilted in the rotational direction about the imaginary axis P or the imaginary axis Q. This tilting operation changes the inclination angle of the reflecting surface 13a of the movable mirror 13. Accordingly, as shown in Fig. 6, the incident angle θ1 of the reconstruction reference light beam B2 can be changed. In this way, information (pages) of a plurality of holograms recorded in the same region (the book) in an angle multiplexed manner can be read out.

In addition, in the drive mechanism 30 shown in Fig. 4, the angle of the reflecting surface 13a of the movable mirror 13 can be changed so as to be directed toward a direction perpendicular to the displacement direction of the reconstruction reference light beam used for multi-angle reconstruction. That is, if the displacement direction of the reconstruction reference light beam is the rotational direction about the imaginary axis P, the reconstruction reference light beam can be displaced in a rotational direction about the imaginary axis Q that is perpendicular to the imaginary axis P. By displacing the reflecting surface 13a in this manner, the incident angle of the reconstruction reference light beam B2 can be changed in a direction perpendicular to the angular direction of the incident angle θ1 shown in Fig. 6. By using this displacement, even when a shift in the position of the recording medium 20 relative to the body 2 occurs, the shift can be corrected.

That is, according to the present embodiment, the hologram reconstructing apparatus 1 include the removable recording medium 20. Accordingly, the position of the head 10 relative to the recording medium 20 is slightly changed each time the recording medium 20 is mounted.

Therefore, after the recording medium 20 is mounted, the angle of the reflecting surface 13a of the movable mirror 13 is fine-tuned in a direction perpendicular to the incident angle θ1 as well as in the direction of the incident angle θ1 shown in Fig. 6. In this way, the reconstruction reference light beam B2 can be supplied to a hologram recorded in the recording medium 20 at an optimum angle. Note that, when the recording medium 20 is mounted in the body 2, the angle of a hologram may be shifted towards the direction of the incident angle θ1 shown in Fig. 6. However, this shift in the angle can be corrected by displacing the angle of the movable mirror 13 and changing the incident angle θ1 of the reconstruction reference light beam B2.

As noted above, by changing the facing angle between the movable mirror 13 and the recording medium 20 in at least two angular directions, an error of the facing condition between the recording medium 20 and the head 10 can be corrected.

In addition, by changing the incident angle of the reconstruction reference light beam B2 towards a direction perpendicular to the angle θ1 shown in Fig. 6, each of holograms recorded in a recording medium in a multiplexed manner can be reconstructed even when the holograms are recorded in an angle multiplexed manner in two directions. Note that, recording in an angle multiplexed manner in two directions can be performed by recording a hologram in the recording medium by changing the incident angle of the recording reference light beam to the angle-θ1 direction shown in Fig. 6 and, subsequently, changing the incident angle towards a direction perpendicular to the angle-θ1 direction (i.e., the angular direction in a plane perpendicular to the plane of Fig. 6).

As described above, by changing the angle of the reflecting surface 13a of the movable mirror 13, information (pages) of a plurality of holograms recorded in the same region (the book) in an angle multiplexed manner can be reconstructed. Note that the hologram region (the book) to be reconstructed can be changed by rotating the X-axis transport screw shaft 4 and the Y-axis transport screw shaft 6 of the hologram reconstructing apparatus 1 shown in Fig. 1 so as to move the head base 7 in the X-Y plane.

Furthermore, in the head 10 of the hologram reconstructing apparatus 1, the parallel light beam B1 is directed towards the recording medium 20, and the incident angle of the reconstruction reference light beam B2 relative to the recording medium 20 can be changed in two directions by using the reflecting surface 13a of the single movable mirror 13. Accordingly, the number of components required for producing the head 10 can be reduced, and therefore, the size of the head 10 can be reduced.

That is, as shown in Figs. 3 and 7, the optical axis of the light beam emitted from the light source 11 to the reflecting surface 13a through the collimating lens 12 is parallel to the front surface 21 of the recording medium 20. In addition, the optical axis is directed in substantially the X-axis direction. Accordingly, as shown by the plan view in Fig. 7, the inclination angle of the reflecting surface 13a includes a first inclination component that reflects the parallel light beam B1 traveling along the X-axis at substantially 90 degrees and causes the light beam to serve as the reconstruction reference light beam B2 traveling in the Z-axis direction. The first inclination component is an angle component that causes the reflecting surface 13a to be at substantially 45 degrees with respect to the front surface 21 of the recording medium 20.

In addition, the reconstruction reference light beam B2 is made incident on the recording medium 20 at a predetermined angle θ1 by means of the reflecting surface 13a. This angle component is a second inclination component of the reflecting surface 13a. The reflecting surface 13a faces the front surface 21 of the recording medium 20 at an angle of an inclination angle which is a compound angle of the first angle component and the second angle component. Subsequently, the incident angle θ1 of the reconstruction reference light beam B2 made incident on the recording medium 20 is changed by the drive mechanism 30 shown in Fig. 4, and the incident angle can be changed in a direction perpendicular to the angle θ1.

As described above, the head 10 has the single reflecting surface 13a, and the optical axis of the parallel light beam B1 is parallel to the front surface 21 of the recording medium 20. Accordingly, the head can be reduced in size. In addition, the head can be reduced in thickness.

## Claims

1. A hologram reconstructing apparatus comprising:
a light source for emitting a reconstruction reference light beam onto a recording medium;
a photosensor for detecting a reconstructed light beam output when the reconstruction reference light beam is diffracted in a hologram region of the recording medium; and
an optical axis alignment mechanism for changing an incident angle of the reconstruction reference light beam emitted from the light source and incident on the hologram region in at least two directions.

2. The hologram reconstructing apparatus according to Claim 1, wherein the directions in which the incident angle of the reconstruction reference light beam incident on the hologram region is changed are two directions perpendicular to each other.

3. The hologram reconstructing apparatus according to Claim 2, wherein recorded information of each of holograms recorded in the same hologram region in an angle multiplexed manner is reconstructable by changing the incident angle relative to the hologram region in a first direction, and wherein the incident angle relative to the hologram region is correctable by changing the incident angle in a second direction.

4. The hologram reconstructing apparatus according to any one of Claims 1 to 3, wherein the optical axis alignment mechanism comprises a reflecting surface that reflects the reconstruction reference light beam emitted from the light source towards the recording medium and driving means for changing an angle of the reflecting surface.

5. The hologram reconstructing apparatus according to Claim 4, wherein an inclination angle of the reflecting surface is set to an angle formed by an inclination component that directs the reconstruction reference light beam emitted from the light source towards the recording medium and an inclination component that makes the reflected reconstruction reference light beam incident on the hologram region at a predetermined incident angle.

6. The hologram reconstructing apparatus according to any one of Claims 1 to 5, wherein the recording medium has a planar shape, and the recording medium is removably mounted at a position at which the recording medium faces the optical axis alignment means and the photosensor.
